**Europäisches Patentamt**

**European Patent Office**

**Office européen des brevets**

(11) Veröffentlichungsnummer: **0 165 497**
**B1**

(12) **EUROPÄISCHE PATENTSCHRIFT**

(45) Veröffentlichungstag der Patentschrift:
12.10.88

(51) Int. Cl.⁴: **F 16 H 19/00**

(21) Anmeldenummer: **85106362.8**

(22) Anmeldetag: **23.05.85**

(54) Getriebe zur Überführung einer rotatorischen in eine translatorische Bewegung.

(30) Priorität: **24.05.84 DE 3419477**

(43) Veröffentlichungstag der Anmeldung:
**27.12.85 Patentblatt 85/52**

(45) Bekanntmachung des Hinweises auf die Patenterteilung:
**12.10.88 Patentblatt 88/41**

(84) Benannte Vertragsstaaten:
**AT BE CH DE FR GB IT LI LU NL SE**

(56) Entgegenhaltungen:
**DE-A-1 936 918**
**DE-B-1 198 159**
**DE-B-2 162 938**
**DE-B-2 848 541**
**FR-A-1 536 676**
**GB-A-1 085 443**
**US-A-2 574 657**
**US-A-3 153 942**
**US-A-4 473 365**

(73) Patentinhaber: **HÖRMANN KG ANTRIEBS- und STEUERUNGSTECHNIK, Remser Brook 11 (Ortsteil Marienfeld), D-4834 Harsewinkel 2 (DE)**

(72) Erfinder: **Hörmann, Michael, Dipl.- Ing., Upheider Weg 94, D-4803 Steinhagen/Westf. (DE)**

(74) Vertreter: **Flügel, Otto, Dipl.- Ing., Lesser, Flügel & Säger Patentanwälte Richard- Strauss- Strasse 56 Postfach 81 05 40, D-8000 München 80 (DE)**

## Beschreibung

Die Erfindung bezieht sich auf ein Getriebe mit den Merkmalen des Oberbegriffes des Anspruches 1 bzw. des Anspruches 8, wie es aus der DE-B-2 162 938 bekannt ist

Weitere Getriebe ähnlicher Art sind zum Beispiel Kurbeltriebe, die jedoch in ihrem translatorischen Arbeitsbereich auf den Durchmesser des Kurbelrades beschränkt sind und entsprechenden Platzbedarf aufweisen. Weiterhin sind Schleppkettenantriebe bekannt, die jedoch aufgrund der endlos ausgebildeten Kette zwei Umlenkräder erfordern und eine verhältnismäßig große Masse aufweisen, abgesehen davon, daß die Kettenführung im Bereich der Längstrume Probleme bereiten kann. Bei schließlich noch bekannten Zahnrad-Zahnstangen-Trieben benötigt die Zahnstange den doppelten Raum in Richtung der Translationsbewegung ihres Abtriebspunktes. Grundsätzlich kann der Eingriff zwischen dem Rotationsglied und dem translatorisch versetzbaren Bauteil reibschlüssig erfolgen, doch bedeutet dies die Gefahr eines Schlupfes bzw. den Aufwand hoher Anpreßkräfte.

Der Erfindung liegt die Aufgabe zugrunde, ein Getriebe der eingangs genannten Art zu schaffen, das bei Beanspruchung auf Zug und Druck einfach ausgestaltet, reibungs- und massearm ausgebildet ist.

Ausgehend von einem Getriebe mit den Merkmalen des Oberbegriffes des Anspruches 1 bzw. des Anspruches 8, wird diese Aufgabe erfindungsgemäß durch dessen Kennzeichen gelöst.

Die erfindungsgemäße Ausbildung des Getriebes zeichnet sich dadurch aus, daß die Übertragung einer rotatorischen in eine translatorische Bewegung besonders reibungsarm erfolgt und die Möglichkeit bietet, eine hin- und hergehende translatorische Bewegung ohne Endlosglieder, wie zum Beispiel Ketten, zur Verfügung zu stellen, obwohl auch eine derartige Ausbildung mit dem erfindungsgemässen Getriebe möglich ist. Wichtig ist, daß das translatorisch bewegte Bewegungsübertragungsglied sowohl auf Druck als auch auf Zug beanspruchbar ist. Die insgesamt formschlüsse Ausbildung der Übertragungsstrecke zwischen dem rotatorischen Antrieb und dem Bewegungsübertragungsglied und auch dessen formschlüssige Kupplung ergeben ein schlupffreies und damit exakt bestimmbares Bewegungsverhalten.

Erfindungswesentlich ist, daß das Bewegungsübertragungsglied zwei- oder mehrteilig ausgebildet ist und erst im Rahmen der Führung zu dem eigentlichen Kraftübertragungsglied zusammengeführt wird. Die einzelnen Teile lassen sich aufgrund der Querbeweglichkeit zur Längsrichtung der Führung raumsparend speichern, sei es in Form einer Trommel, oder auch in Form einer Rückführung parallel zur Führungsrichtung.

Von besonderem Vorteil ist die getriebliche Verbindung zwischen dem Antriebsmotor und dem Bewegungsübertragungsglied in Form eines Schneckentriebes. Dadurch kann ein Untersetzungsgetriebe eingespart werden. Die Schnecke wird unmittelbar von der Motorachse getrieben, die Übersetzung zwischen Schnecke und dem "Schneckenradgewinde" in den Teilen der Bewegungsübertragungseinrichtung - bei zwei Teilen jeweils hälftig - schafft die für die Schneckentriebe typische besonders hohe Untersetzung.

Der verzahnte Eingriff zwischen den beiden oder mehreren Teilen des Bewegungsübertragungsgliedes führt dazu, daß nach deren Zusammenführung eine in Bewegungsrichtung formschlüssige Verbindung geschaffen wird, die dazu führt, daß die Kraftübertragung über die Zahnflanken erfolgt und damit die Halterung der Abschnitte, beispielsweise aufgeklebt auf ein verformbares Band, nicht belastet. Dabei kann die Verzahnung derart ausgeführt werden, daß praktisch keine Kraftkomponenten quer zur Bewegungsrichtung auftreten, so daß die Reibungsbelastung innerhalb der Führung vernachlässigbar gering wird.

Für kleinere Belastungen, insbesondere Zugbelastungen, werden die beiden Teile der Bewegungsübertragungseinrichtung als Bänder ausgeführt, die in ununterbrochener Weise mit einer Verzahnung versehen sind. Die ineinander greifende Verzahnung vereinigt hinsichtlich der Druck- und Zugbelastungen die beiden Teile der Bewegungsübertragungseinrichtung innerhalb der Führung zu einem Ganzen, wobei die Verzahnung insbesondere derart ausgebildet ist, daß sie nach Art eines Reißverschlusses mit Hinterschneidungen zwischen den Zähnen und den Zahnlücken ausgebildet ist und damit bei Zug- und Druckbelastungen keine Kräfte quer zur Längsrichtung der Teile bzw. der Bewegungsübertragungseinrichtung innerhalb der Führung ausüben. Die Herstellung eines solchen Antriebes ist besonders einfach, die Reibung innerhalb der Führung ist praktisch vernachlässigbar und die Anordnung ist raumsparend weil unter Berücksichtigung dieser verhältnismäßig kleinen Zugbelastungen die Querschnitte der beiden im zusammengeführten Zustand die Bewegungsübertragungseinrichtung bildenden Teile außerhalb der Verzahnung gering gehalten werden können. Auf diese Weise lassen sich verhältnismäßig enge Umlenkungen im Trennungsbereich der beiden Teile vorsehen. In besonders bevorzugter Ausführung ist in Längsrichtung zwischen der Verzahnung ein Gewinde vorgesehen, in das eine Schnecke oder Schraube eingreift, die unmittelbar mit der Rotorachse eines Antriebsmotors verbunden ist. Das bedeutet, daß beide Teile der zweigeteilten Bewegungsübertragungseinrichtung jeweils die Hälfte eines in Längsrichtung der Teile ausgebildeten Gewindes für die Schnecke aufweisen, und zwar bevorzugt im Mittelbereich der Teile der Bewegungseinrichtung, derart, daß beidseitig der Gewindeausbildung ein Randstreifen mit der Verzahnung verbleibt.

Diese und weitere bevorzugte Ausführungsformen der Erfindung ergeben sich aus den Unteransprüchen in Zusammenhang mit den in der Zeichnung wiedergegebenen Ausführungsbeispielen, auf die besonders Bezug genommen wird und deren nachfolgende Beschreibung die Erfindung näher erläutert. Es zeigen:

Figur 1 eine Prinzip-Querschnitts-Darstellung des Getriebes;

Figur 2 eine Querschnittsdarstellung im Bereich der Führung;

Figur 3 eine erste Art der Verbindung der Abschnitte eines Teiles der Bewegungsübertragungseinrichtung;

Figur 4 ein zweites Ausführungsbeispiel der Anordnung der Abschnitte eines Teils der Bewegungsübertragungseinrichtung auf einem Band;

Figur 5 eine andere Art der Gelenkverbindung zwischen zwei Abschnitten eines Teils der Bewegungsübertragungseinrichtung;

Figur 6 die Ausformung der Abschnitte eines Teil der Bewegungsübertragungseinrichtung im Rahmen eines einstückigen Bandstreifens;

Figur 7 eine Prinzip-Querschnittsdarstellung des Getriebes mit einer alternativen Ausführungsform der Bewegungsübertragungseinrichtung in Form durchgehend ausgebildeter Teile der Bewegungsübertragungseinrichtung.

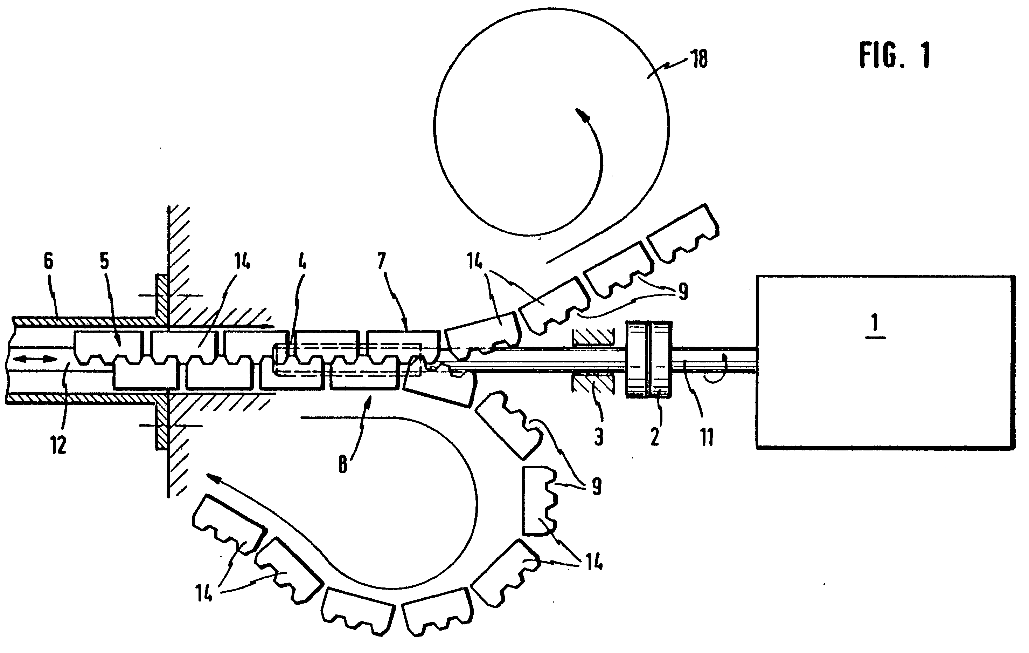

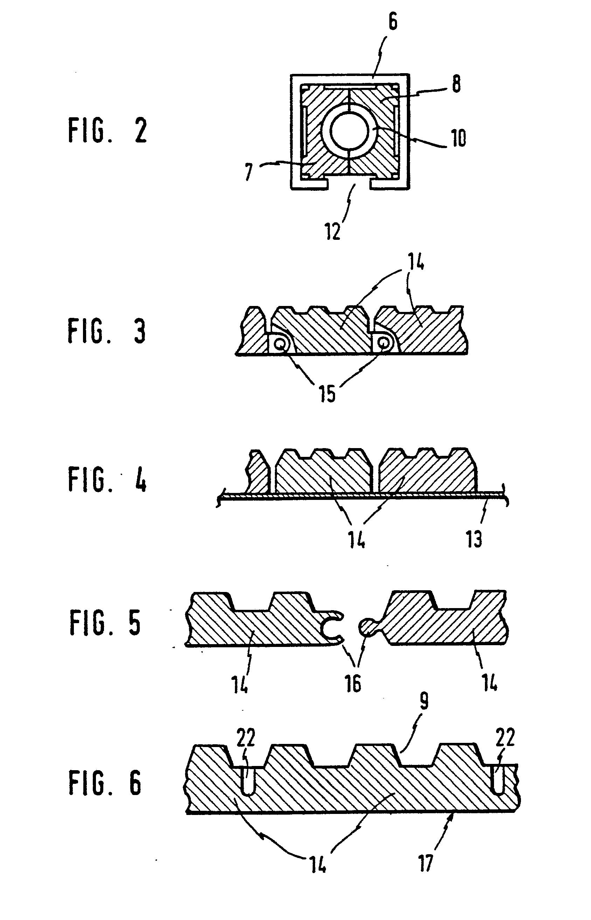

In Figur 1 ist ein Antriebsmotor 1 dargestellt, dessen Abtriebswelle (Motorwelle) 11 über eine Kupplung 2, die bei 3 schematisch angedeutet gelagert ist, in einer Schnecke 4 mündet. Diese Schnecke greift in ein entsprechendes Schraubengewinde 10 ein, das jeweils zur Hälfte in Abschnitten 14 von zwei Teilen oder Strängen 7 und 8 eines insgesamt mit 5 bezeichneten Bewegungsübertragungsgliedes besteht (Fig. 2). Dieses Bewegungsübertragungsglied 5 wird geradlinig in einer abgebrochen dargestellten Führung 6 geführt. Die Teile 7 und 8 des Bewegungsübertragungsgliedes 5 werden vor dem Eingriffsbereich mit der Schnecke durch Leitflächen zwangsläufig zusammengeführt. Der Teil 7 wird andeutungsweise bei 18 in einer Trommel gespeichert, der Teil 6 wird - hier zur Demonstration - in einem Speicher parallel zur Führung 6 aufgenommen.

Die Abschnitte 14 eines jeden Teiles 7 bzw. 8 des Bewegungsübertragungsgliedes 5 sind an den einander zugewandten Flächen mit einer Verzahnung 9 versehen, die im Ausführungsbeispiel trapezförmig wiedergegeben ist. Diese Verzahnung 9 wird jedoch vorzugsweise so gewählt, daß der formschlüssige Eingriff hinsichtlich der Kraftübertragung in Richtung der Führung 6 praktisch keine quer zur Führungslängsrichtung verlaufende Kraftkomponente erzeugt. Dies läßt sich mühelos mit einer evolventen förmigen Verzahnung oder dergleichen erreichen.

Die Führung 6 weist einen Längsschlitz 12 auf, durch welchen ein Schleppglied oder dergleichen hindurchgeführt ist, das die Verbindung zwischen dem dem Antriebsmotor abgewandten Ende des Bewegungsübertragungsgliedes 5 und einem in Richtung der Führung 6 mitzunehmenden Gegenstand herstellt.

Im Bereich der Schnecke bzw. deren der Motorwelle 11 zugewandten Ende werden die Teile 7 und 8 des Bewegungsgliedes 5 voneinander entfernt geführt und gespeichert. Auf diese Weise wird eine platzsparende Anordnung der gesamten Antriebseinrichtung erreicht.

Aufgrund des hohen Untersetzungsverhältnisses zwischen der Schnecke 4 und dem der Schnecke angepaßten Schraubengewinde 10, das jeweils zur Hälfte in den Abschnitten 14 des Teiles 7 und demjenigen des Teiles 8 des Bewegungsübertragungsgliedes 5 angeordnet ist, ist ein weiteres Untersetzungsgetriebe nicht erforderlich. Diese Antriebseinrichtung ist damit besonders preiswert herzustellen.

Es ist ohne weiteres verständlich, daß aufgrund der Verzahnung 9, über die die Abschnitte 14 der Teile 7 und 8 der Bewegungsübertragungseinrichtung 5 ineinandergreifen, eine Zug- und Druckbelastung übertragen werden kann. Wie die Zeichnung erkennen läßt, sind die Abschnitte 14 der Teile 7 und 8 derart gegeneinander versetzt angeordnet, daß jeweils Abschnitt 14 beispielsweise des Teiles 7 zwei benachbarte Abschnitte 14 des Teiles 8 überbrückend verbindet. Damit wird erreicht, daß Zug- und Druckkräfte ausschließlich über die Verzahnung der Abschnitte 14 übertragen werden.

Die Abschnitte 14 der Teile 7 und 8 des Bewegungsübertragungsgliedes 5 können auf verschiedene Weise miteinander verbunden werden, wobei die Verbindung lediglich der korrekten, hinsichtlich der Verzahnung 9 erforderlichen Beabstandung der Abschnitte 14 dient und im übrigen ermöglicht, daß die Teile 7 und 8 senkrecht zur Richtung der Führung 6 versetzbar sind.

Figur 3 zeigt ein erstes Ausführungsbeispiel der Verbindung zwischen den Abschnitten 14 eines Teiles 7 bzw. 8 des Bewegungsübertragungsgliedes 5 mit Hilfe von konkreten Gelenken mit Achsen 15.

Figur 4 zeigt ein zweites Ausführungsbeispiel, bei dem die Abschnitte 14 auf ein Band 13 aufgeklebt sind, das sich quer zu seiner dargestellten Längsrichtung verformen läßt.

Figur 5 zeigt die Verbindung zwischen zwei Abschnitten 14, insbesondere bei deren Ausführung in Kunststoff, in Form eines Gelenkeingriffes 16.

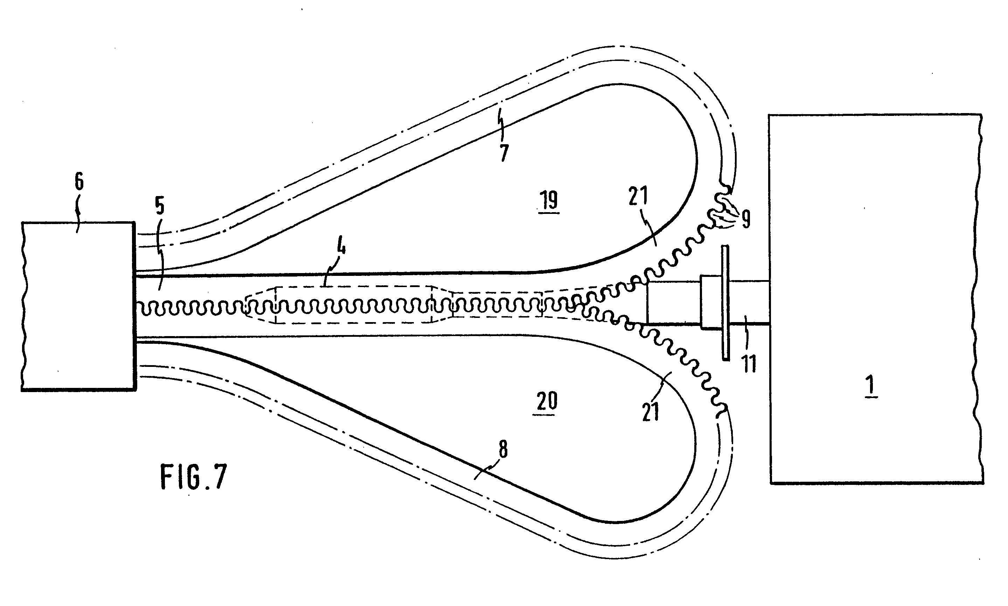

Figur 6 zeigt die Gewinnung von Abschnitten 14 aus einem einstückig durchgehenden Band 17, insoweit also ein Zahnriemen, bei dessen Herstellung die exakte Ausführung der Verzahnung 9 besonders einfach und die Begrenzung der Abschnitte durch Aussparungen 22 getroffen ist.

Figur 7 zeigt eine Ausführungsform, wie sie insbesondere für geringere Druck- und vor allem Zugbelastungen vorgesehen werden kann, so beispielsweise für die motorisch angetriebene Bewegung von Fenstern und/oder Schiebedächern und dergleichen von Automobilen. Die dabei auftretenden Kräfte in Druck- und Zugrichtung sind so gering, daß der Querschnitt der Bänder 21, der im Bereich der Teile 7 und 8 außerhalb der Verzahnung 9 verbleibt, völlig ausreichend ist, die im Bereich der Verzahnung auftretenden Zugkräfte aufzunehmen, die auf das durch Zusammenfügung der Teile 7 und 8 gebildete Bewegungsübertragungsglied 5 bei dem hier in Frage stehenden Betrieb auf Druck- und Zugbelastung ausgeübt werden. Die Bänder 21 können dabei auf räumlich engem Bereich aus ihrer der Führung 6 entsprechenden Längsrichtung ausgelenkt und in einen Speicher - 18 in Figur 1 - oder in Parallellage zu der Führung 6 gebracht werden.

Vor dem Eintrittsbereich in die Führung 6 werden die bandförmigen Teile 7 und 8 durch Umlenkführungen 19 und 20 zusammengeführt, derart, daß der Verzahnungseingriff bereits im Bereich der Schnecke 4 sichergestellt ist. Vor diesem Bereich sind die beiden Teile 7 und 8 getrennt und werden jeweils voneinander fort gekrümmt durch die jeweiligen Umlenkführungen 19 bzw. 20 in eine Speicherstellung parallel zur Führung 6 geleitet, die zusammen mit der Führung 6 in diesem Ausführungsbeispiel in einem Führungskörper vereint ausgebildet ist. In praktischer Ausführung kann man die bandförmigen Teile 7 und 8 jeweils in Einzelnuten führen, die von der Speicherstellung ausgehend in den Bereich der Zusammenführung der Teile 7 und 8 führen und dort in eine gemeinsame breitere Nut münden, in deren Bereich die Schnecke 4 vorgesehen ist und die ihrerseits in die Führung 6 überleitet. Durch einen flachen Deckel läßt sich dann ein solcher Umlenkführungskörper derart schließen, daß die Teile 7 und 8 in ihrer Enzel-Umlenkführung wie in ihrer Zusammenführung in allseits geschlossenen Kanälen verlaufen.

Eine Überlastsicherung läßt sich besonders einfach dadurch gestalten, daß man die Spindel oder Schnecke 4 unter der Reaktionskraft des in seiner Längsverschiebebewegung behinderten Bewegungsübertragungsgliedes gegen einen Widerstand, insbesondere eine Feder, verschiebbar gestaltet. Die Federkraft gibt dabei die Lastschwelle an, ab der ein Behinderungsfall angenommen wird. Die Verschiebung läßt sich in einen Abschaltvorgang für einen Antriebsmotor, eine Alarmauslösung und dergleichen auswerten. Im Falle der direkten Verbindung zwischen dem Rotor des Antriebsmotors 1 und der Schnecke 4 kann der Motor bzw. zumindest sein Rotor entsprechend in Längsrichtung der Rotationsachse verschiebbar ausgebildet sein, wodurch gegen einen bestimmten, eine Ansprechschwelle vorgebbaren Federwiderstand ein Alarm- bzw. Abschaltsignal ausgelöst werden kann. Des weiteren ist es möglich, zwischen der Schnecke und den Rotor des Antriebsmotors 1 eine axial-spielbehaftete Kupplung 2 einzuschalten, in deren Bereich die federbelastete Notfall-Verschiebung stattfindet, die wiederum zur Signalauslösung ausgenutzt werden kann.

Mit der erfindungsgemäßen Ausgestaltung dieses Antriebes läßt sich ein raumsparender, geräuscharmer und hinsichtlich der Untersetzung zwischen dem Antriebsmotor und dem Bewegungsübertragungsglied besonders wirtschaftlicher Antriebswandler zur Verfügung stellen, dessen Einsatzbereich weit gespannt ist und der sich vor allem auch für die räumlich engen Verhältnisse im Zusammenhang mit der Betätigung von versenkbaren Fenstern, Schiebedächern und dergleichen von Automobilen einsetzen läßt. Dies gilt vor allem für die schwächere Ausbildung des letzten Ausführungsbeispieles, während die Ausführungen nach den Figuren 1 bis 6 mit Abschnitten für höhere Zugkraftbelastung, wie sie beispielsweise bei Überkopftorantrieben auftreten eingesetzt werden können.

**Patentansprüche**

1. Getriebe zur Überführung einer rotatorischen in eine translatorische Bewegung, vorzugsweise angeschlossen an ein Antriebsmotoraggregat, insbesondere für das Öffnen und Schließen eines Fensters, Schiebedaches oder dergleichen von Kraftfahrzeugen oder für Überkopftorantriebe, mit einem Rotationsantrieb und einem translatorisch bewegbar gehaltenen Bewegungsübertragungsglied (5), das an den Antrieb im Bereich einer Führung (6) über eine formschlüssige Getriebeverbindung angeschlossen ist und das in Bewegungsrichtung gesehen in wenigstens zwei Stränge (7, 8) längsgeteilt ausgebildet ist, die einen Endes außerhalb der Führung quer zur Führungsrichtung verformbar jeweils für sich getrennt geführt und anderen Endes zusammengeführt gegen ein seitliches Entfernen voneinander gehalten werden und deren jedes aus einer Reihe hintereinander angeordneter, miteinander verbundener Abschnitte (14) besteht, deren jeder zwei benachbarte Abschnitte des jeweils gegenüberliegenden Stranges überbrückt und in einen dieser Abschnitte formschlüssig eingreift, dadurch gekennzeichnet, daß die Abschnitte (14) der Stränge (7, 8) über eine Verzahnung (9) derart ineinandergreifen, daß jeder Abschnitt des einen Stranges (7 bzw. 8) in jeden der gegenüberliegenden Abschnitte des anderen Stranges (8 bzw. 7) im zusammengeführten Zustand in Zug- und Druckrichtung formschlüssig eingreift (Fig. 1).

2. Getriebe nach Anspruch 1, dadurch gekennzeichnet, daß die Abschnitte (14) auf ein quer zur Führungsrichtung verformbares Band (13) aufgebracht, insbesondere aufgeklebt, sind (Fig. 4).

3. Getriebe nach Anspruch 1, dadurch gekennzeichnet, daß die aufeinanderfolgenden Abschnitt (14) aneinander angelenkt (15) sind (Fig. 3).

4. Getriebe nach Anspruch 3, dadurch gekennzeichnet, daß die Abschnitte (14) als Kunststoffteile ohne eigenständige Achsen gelenkig ineinandergreifend (16) ausgebildet sind (Fig. 5).

5. Getriebe nach Anspruch 1, dadurch gekennzeichnet, daß die Abschnitte (14) einstückig als Bestandteile eines Bandes (17) ausgebildet sind (Fig. 6).

6. Getriebe nach Anspruch 5, dadurch gekennzeichnet, daß die Abschnitte (14) durch von der Verzahnung (9) her gesehen geführte Aussparungen (22) innerhalb des Bandes (17) gebildet sind.

7. Getriebe nach einem der Ansprüche 1 bis 6, dadurch gekennzeichnet, daß jeder Abschnitt (14) wenigstens drei Zähne und zwei Zahnlücken aufweist und daß innerhalb der Führung eine weitere Zahnlücke jeweils zwischen zwei benachbarten Abschnitten (14) der Abschnittreihe eines jeden der Stränge (7, 8) gebildet ist, in die ein mittlerer Zahn des jeweils gegenüberliegenden Abschnittes (14) eingreift.

8. Getriebe zur Überführung einer rotatorischen in eine translatorische Bewegung, vorzugsweise angeschlossen an ein Antriebsmotoraggregat, insbesondere für das Öffnen und Schließen eines Fensters, Schiebedaches oder dergleichen von Kraftfahrzeugen oder für Überkopfantriebe, mit einem Rotationsantrieb und einem translatorisch bewegbar gehaltenen Bewegungsübertragungsglied (5), das an den Antrieb im Bereich einer Führung (6) über eine formschlüssige Getriebeverbindung angeschlossen ist und das in Bewegungsrichtung gesehen in wenigstens zwei Stränge (7, 8) längsgeteilt ausgebildet ist, die einen Endes außerhalb der Führung quer zur Führungsrichtung verformbar jeweils für sich getrennt geführt und anderen Endes zusammengeführt gegen ein seitliches Entfernen voneinander gehalten werden und die im zusammengeführten Zustand ineinander eingreifen, dadurch gekennzeichnet, daß die Stränge (7, 8) jeweils durchgehend mit einer ununterbrochenen Verzahnung (9) versehen und in ihrem bezüglich der Zähne der Verzahnung (9) gesehen verbleibenden Bandquerschnitt senkrecht zur Längsrichtung der Führung (6) gesehen nach Werkstoff und/oder Dicke leicht verformbar ausgebildet sind (Fig. 7).

9. Getriebe nach einem der Ansprüche 1 bis 8, dadurch gekennzeichnet, daß die Verzahnung (9) ein steilflankiges Trapezgewinde ist.

10. Getriebe nach einem der Ansprüche 1 bis 8, dadurch gekennzeichnet, daß die Verzahnung evolventenförmige oder dergleichen Flanken aufweist, derart, daß die Kraftübertragung innerhalb der Führung (6) praktisch nur in Führungsrichtung und ohne nennenswerte Querkomponente stattfindet.

11. Getriebe nach einem der Ansprüche 1 bis 8, dadurch gekennzeichnet, daß die Verzahnung (9) Zähne aufweist, die in ihrem vom Mittelbereich her gesehen zum Kopf hin gerichteten Bereich verbreitert ausgebildet sind und in Zahnlücken eingreifen, die in ihren von der Mitte aus zum Zahnlückengrund hin gesehenen Bereich verbreitert ausgeführt sind, derart, daß die Zähne und die Zahnlücken jeweils zueinander quer zur Längsrichtung der Stränge (7, 8) gesehen hinterschnitten ausgebildet sind.

12. Getriebe nach einem der Ansprüche 1 bis 11, dadurch gekennzeichnet, daß die formschlüssige Getriebeverbindung als Schneckentrieb (4, 10) ausgebildet ist.

13. Getriebe nach Anspruch 12, dadurch gekennzeichnet, daß die Schnecke (4) des Schneckentriebs direkt an eine Abtriebswelle (11) des Antriebsmotors (1) angeschlossen ist.

14. Getriebe nach Anspruch 12 oder 13, dadurch gekennzeichnet, daß die Verzahnung (9) der Stränge (7, 8) durch eine axial in deren Längsrichtung verlaufende Gewindeausbildung (10) für die Aufnahme der Schnecke (4) unterteilt ist (Fig. 2).

15. Getriebe nach einem der Ansprüche 1 bis 14, dadurch gekennzeichnet, daß die Führung (6) einen Längsschlitz (12) für den Durchgang eines Anschlußgliedes aufweist, das einen Endes an dem Bewegungsübertragungsglied (5) und anderen Endes an einem mittels des Bewegungsübertragungsgliedes (5) zu bewegenden Gegenstand anschließbar ist.

16. Getriebe nach einem der Ansprüche 1 bis 15, dadurch gekennzeichnet, daß das Bewegungsübertragungsglied (5) bzw. dessen Stränge (7, 8) offen ausgebildet sind.

17. Getriebe nach einem der Ansprüche 1 bis 16, dadurch gekennzeichnet, daß das dem Antrieb abgewandte Ende des Bewegungsübertragungsgliedes (5) in jeder Bewegungslage innerhalb der Führung (6) verbleibt und an das Anschlußglied angekoppelt ist.

18. Getriebe nach einem der Ansprüche 1 bis 17, dadurch gekennzechnet, daß die außerhalb der Führung (6) befindlichen Stränge (7, 8) in einem Trommelspeicher (18) gehalten sind.

19. Getriebe nach einem der Ansprüche 1 bis 7, dadurch gekennzeichnet, daß die Stränge (7, 8) außerhalb der Führung (6) etwa parallel zu dieser verlaufend geführt sind.

20. Getriebe nach einem der Ansprüche 1 bis 19, dadurch gekennzeichnet, daß die Schnecke (4), insbesondere in Längsrichtung ihrer Rotationsachse, unter dem Reaktionsdruck des in seiner Längsbeweglichkeit behinderten Bewegungsübertragungsgliedes (5) gegen einen Widerstand, insbesondere eine Feder, über eine bestimmte Signalstrecke verschiebbar gelagert ist.

21. Getriebe nach Anspruch 20, <u>dadurch gekennzeichnet</u>, daß der über die Welle (11) starr mit der Schnecke (4) verbundene Antriebsmotor (1) bzw. dessen Rotor um die Signalstrecke in Richtung seiner Rotationsachse verschiebbar gelagert ist.

22. Getriebe nach einem der Ansprüche 1 bis 20, <u>dadurch gekennzeichnet</u>, daß in die Welle (11) eine axial-spielbehaftete Kupplung (2) zwischengeschaltet ist.

**Claims**

1. Gear for converting a rotary into a translatory movement, preferably connected to a drive motor unit, particularly for opening and closing a window, sliding roof or the like in motor vehicles or for overhead gate drives, having a rotary drive and a motion transmitting member (5), which is held so as to be movable in translation, which is connected to the drive in the region of a guide (6) via a form-locking gear connection and which is longitudinally divided, viewed in the direction of motion, into at least two strips (7, 8) which are guided separately at one end outside the guide, so as to be deformable transversely to the direction of the guide, and at the other end are guided together, secured to prevent them moving laterally apart, each strip consisting of a series of inter-connected portions (14) arranged one behind the other, each of which bridges two adjacent portions of the opposite strip and engages in form-locking manner in one of these portions, characterised in that the portions (14) of the strips (7, 8) engage with one another, via teeth (9), in such a way that each portion of one strip (7 or 8) engages in each of the opposing portions of the other strip (8 or 7, respectively) so as to lock together by their shape in the directions of pulling and pushing in the assembled state (Fig. 1).

2. Gear as claimed in claim 1, characterised in that the portions (14) are applied, more particularly adhesively bonded, to a belt (13) which is deformable transversely to the direction of guiding (Fig. 4).

3. Gear as claimed in claim 1, characterised in that the successive portions (14) are linked together in articulated (15) manner (Fig. 3).

4. Gear as claimed in claim 3, characterised in that the portions (14) are constructed as plastics components engaging in articulated (16) manner with one another without any independent axes (Fig. 5).

5. Gear as claimed in claim 1, characterised in that the portions (14) are constructed in one piece as the constituents of a belt (17) (Fig. 6).

6. Gear as claimed in claim 5, characterised in that the portions (14) are formed by recesses (22) on the inside of the belt (17) which are guided, viewed from the teeth (9).

7. Gear as claimed in one of claims 1 to 6, characterised in that each portion (14) has at least three teeth and two gaps between the teeth and that within the guide there is formed another gap in the teeth between two adjacent portions (14) of the series of portions of each of the strips (7, 8), in which a central tooth of the opposing portion (14) engages.

8. Gear for converting a rotary into a translatory movement, preferably connected to a drive motor unit, particularly for opening and closing a window, sliding roof or the like in motor vehicles or for overhead gate drives, having a rotary drive and a motion transmitting member (5), which is held so as to be movable in translation, which is connected to the drive in the region of a guide (6) via a form-locking gear connection and which is longitudinally divided, viewed in the direction of motion, into at least two strips (7, 8) which are guided separately at one end outside the guide, so as to be deformable transversely to the direction of the guide, and at the other end are guided together, secured to prevent them moving laterally apart, and engage in one another in the assembled state, characterised in that the strips (7, 8) are each provided continuously with uninterrupted teeth (9) and are constructed to be readily deformable, by their material and/or thickness, at right angles to the longitudinal direction of the guide (6) in that part of the cross-section of the belt which is not occupied by the teeth (9) (Fig. 7).

9. Gear as claimed in one of claims 1 to 8, characterised in that the teeth (9) consist of a steep-sided trapezoidal thread.

10. Gear as claimed in one of claims 1 to 8, characterised in that the teeth have involute-shaped or similar sides, so that the transfer of force within the guide (6) occurs substantially only in the direction of guiding and without any appreciable transverse component.

11. Gear as claimed in one of claims 1 to 8, characterised in that the toothed portion (9) has teeth which broaden out in that part which extends from the middle area towards the top and engage in gaps which broaden out in that part which extends from the centre towards the bottom of the gap, so that the teeth and the gaps are of undercut construction relative to one another, viewed at right angles to the longitudinal direction of the strips (7, 8).

12. Gear as claimed in one of claims 1 to 11, characterised in that the form-locking gear connection is constructed as a worm gear (4, 10).

13. Gear as claimed in claim 12, characterised in that the worm (4) of the worm gear is connected directly to a driven shaft (11) of the drive motor (1).

14. Gear as claimed in claim 12 or 13, characterised in that the teeth (9) of the strips (7, 8) are subdivided by a thread construction (10) extending axially in the longitudinal direction thereof in order to receive the worm (4) (Fig. 2).

15. Gear as claimed in one of claims 1 to 14, characterised in that the guide (6) has a longitudinal slot (12) for the insertion of a connecting member which can be connected at one end to the motion transmitting member (5) and at the other end to an object which is to be moved by means of the motion transmitting member (5).

16. Gear as claimed in one of claims 1 to 15, characterised in that the movement transmitting member (5) or the strips (7, 8) thereof are open in construction.

17. Gear as claimed in one of claims 1 to 16, characterised in that the end of the motion transmitting member (5) remote from the drive remains within the guide (6) in each position of movement and is coupled to the connecting member.

18. Gear as claimed in one of claims 1 to 17, characterised in that the strips (7, 8) located outside the guide (6) are retained in a drum store (18).

19. Gear as claimed in one of claims 1 to 17, characterised in that the strips (7, 8) are guided outside the guide (6) and substantially parallel thereto.

20. Gear as claimed in one of claims 1 to 19, characterised in that the worm (4) is mounted so as to be movable counter to a resistance, particularly a spring, over a specific signal distance, more particularly in the longitudinal direction of the rotation axis of said worm, under the reaction pressure of the motion transmitting member (5) which is limited in its longitudinal mobility.

21. Gear as claimed in claim 20, characterised in that the drive motor (1) rigidly connected to the worm (4) via the shaft (11), or the rotor thereof is mounted so as to be movable by the signal distance in the direction of its rotation axis.

22. Gear as claimed in one of claims 1 to 20, characterised in that a coupling (2) with axial play is inserted in the shaft (11).

**Revendications**

1. Transmission pour convertir un mouvement rotatif en un mouvement rectiligne, raccordée de préférence à un groupe moteur d'entraînement, notamment pour l'ouverture et la fermeture d'une fenêtre, toit ouvrant ou autre élément semblable de véhicules automobiles, ou bien pour des commandes, se situant en haut de grande portes, transmission comportant un entraînement en rotation et un organe de transmission de mouvement (5) maintenu déplaçable en ligne droite, organe qui est raccordé à l'entraînement par l'intermediaire d'une transmission par liaison par la forme, dans la zone d'un guidage (6), et qui, vu dans la direction du déplacement est constitué de façon à être divisé en long en au moins deux organes (7, 8) qui sont guidés chacun pour soi séparément en étant déformables à une extrémité extérieure au guidage, transversalement par rapport à la direction du guidage, et sont maintenus réunis à l'autre extrémité contre un écartement latéral l'un de l'autre, cordons dont chacun est constitué par une série de segments (14) disposés les uns derrière les autres et reliés les uns aux autres, et dont chacun forme un pont sur deux segments voisins du cordon faisant chaque fois face et vient en prise par conformation dans l'un de ces segments, transmission caractérisée en ce que les segments (14) des cordons (7, 8) sont en prise les uns dans les autres par l'intermédiaire d'une denture (9) de telle manière, que chaque segment de l'un des cordons (7 ou 8) vient en prise par liaison par la forme dans chacun des segments lui faisant face de l'autre cordon (8 ou 7), une fois l'assemblage réalisé, en direction de la traction et de la pression (figure 1).

2. Transmission selon la revendication 1, caractérisée en ce que les segments (14) sont appliqués, notamment collés, sur une bande (13) déformable transversalement par rapport à la direction du guidage (figure 4).

3. Transmission selon la revendication 1, caractérisée en ce que les segments (14) qui se succèdent sont articulés (en 15) chaque fois l'un sur l'autre (figure 3).

4. Transmission selon la revendication 3, caractérisée en ce que les segments (14) sont constitués sous la forme d'éléments de matière synthétique venant en prise en (16), sans axes à stabilité propre, par articulation (figure 5).

5. Transmission selon la revendication 1, caractérisée en ce que les segments (14) sont constitués d'une seule pièce en tant que constituants d'une bande (17) (figure 6).

6. Transmission selon la revendication 5, caractérisée en ce que les segments (14) sont formés par des évidements (22) dirigés, vus depuis la denture (9), à l'intérieur de la bande (17).

7. Transmission selon l'une des revendications 1 à 6, caractérisée en ce que chaque segment (14) comporte au moins trois dents et deux entredents, et en ce que, à l'intérieur du guidage, est formé un autre espace vide chaque fois entre deux segments voisins (14) de la série de segments de chacun des cordons (7, 8), espace vide dans lequel vient en prise une dent centrale du segment (14) situé chaque fois en face.

8. Transmission pour convertir un mouvement rotatif en un mouvement rectiligne, raccordée de préférence à un groupe moteur d'entraînement, notamment pour l'ouverture et la fermeture d'une fenêtre, toit ouvrant ou autre élément semblable de véhicules automobiles, ou bien pour des commandes, se situant en haut de grandes portes, transmission comportant un entraînement en rotation et un organe de transmission de mouvement (5) maintenu déplaçable en ligne droite, organe qui est raccordé à l'entraînement, par l'intermédiaire d'une transmission par liaison par la forme, dans la zone d'un guidage (6) et qui, vu dans la direction du déplacement, est constitué de façon à être divisé en long en au moins deux cordons (7, 8), qui sont guidés chacun pour soi séparément en étant déformables à une extrémité extérieure au guidage, transversalement par rapport à la direction du guidage, et sont maintenus réunis à l'autre extrémité contre un écartement latéral l'un de l'autre, cordons qui viennent en prise l'un dans l'autre en positions d'assemblage, transmission caractérisée en ce que les cordons (7, 8) sont pourvus chacun, de façon continue, d'une denture (9) ininterrompue et, dans leur section transversale de bande restante, vue par rapport aux dents des dentures (9), sont constitués de façon à être vus perpendiculairement à la direction longitudinale du guidage (6), facilement déformables en vertu du matériau et/ou de l'épaisseur mise en oeuvre (figure 7).

9. Transmission selon l'une des revendications 1 à 8, caractérisée en ce que la denture (9) est un filetage trapézoïdal à flancs raides.

10. Transmission selon l'une des revendications 1 à 8, caractérisée en ce que la denture (9) présente des flancs en forme de développantes ou analogues de telle manière, que la transmission de force s'effectue, à l'intérieur du guidage (6), pratiquement seulement dans la direction de ce guidage et sans composantes transversales notables.

11. Transmission selon l'une des revendications 1 à 8, caractérisée en ce que la denture (9) comporte des dents qui dans leur zone dirigée vers la tête, vue depuis la zone médiane, sont constituées élargies, et viennent en prise dans des entredents qui, dans leur zone vue en partant du centre vers la base de l'entredent, sont réalisés élargis de telle manière, que les dents et les entredents sont constitués en étant contre-dépouillés chaque fois l'une par rapport à l'autre, vus transversalement par rapport à la direction longitudinale des cordons (7, 8).

12. Transmission selon l'une des revendications 1 à 11, caractérisée en ce que la liaison de transmission en jonction par la forme est réalisée sous la forme d'engrenage à vis sans fin (4, 10).

13. Transmission selon la revendication 12, caractérisée en ce que la vis sans fin (4) de l'engrenage à vis sans fin est raccordée directement à un arbre de sortie (11) du moteur d'entraînement (1).

14. Transmission selon la revendication 12 ou 13, caractérisée en ce que l'ensemble des dentures (9) des cordons (7, 8) est divisé par un filetage (10) s'étendant axialement dans leur direction longitudinale pour recevoir la vis sans fin (4). (figure 2).

15. Transmission selon l'une des revendications 1 à 14, caractérisée en ce que le guidage (6) comporte une fente longitudinale (12) pour le passage d'un élément de raccordement, dont une extrémité se raccorde à l'organe de transmission de mouvement (5) et l'autre extrémité se raccorde à l'objet à déplacer au moyen de cet organe de transmission de mouvement (5).

16. Transmission selon l'une des revendications 1 à 15, caractérisée en ce que l'organe de transmission de mouvement (5), c'est-à-dire ses cordons (7, 8) sont constitués ouverts.

17. Transmission selon l'une des revendications 1 à 16, caractérisée en ce que l'extrémité de l'organe de transmission de mouvement (5) qui est située à l'opposé de l'entraînement reste dans chaque position de déplacement à l'intérieur du guidage (6) et est accouplée avec l'élément de raccordement.

18. Transmission selon l'une des revendications 1 à 17, caractérisée en ce que les cordons (7, 8) qui se trouvent au-dehors du guidage (6) sont maintenus dans un dispositif d'emmagasinage à tambour (18).

19. Transmission selon l'une des revendications 1 à 17, caractérisée en ce que les cordons (7, 8) sont amenés, au-dehors du guidage (6) à se diriger à peu près parallèlement à se guidage.

20. Transmission selon l'une des revendications 1 à 19, caractérisée en ce que la vis sans fin (4), notamment en direction longitudinale de son axe de rotation, est montée de façon à pouvoir se déplacer, d'une valeur de signal déterminée, sous l'effet de la pression de réaction de l'organe de transmission de mouvement (5) entravé dans sa mobilité longitudinale, ce déplacement s'effectuant contre une résistance, notamment un ressort.

21. Transmission selon la revendication 20, caractérisée en ce que le moteur d'entraînement (1), ou son rotor, relié rigidement par l'arbre (11) à la vis sans fin (4), est monté de façon à pouvoir se déplacer, de la valeur de signal, en direction de son axe de rotation.

22. Transmission selon l'une des revendications 1 à 20, caractérisée en ce que dans l'arbre (11) est intercalé un accouplement (2) affecté de jeu axial.

FIG. 1

0 165 497

FIG. 2

FIG. 3

FIG. 4

FIG. 5

FIG. 6

FIG.7